# EUROPÄISCHE PATENTSCHRIFT

(11) **EP 2 295 156 B1**
(45) Veröffentlichungstag und Bekanntmachung des Hinweises auf die Patenterteilung: **21.05.2014**
(21) Anmeldenummer: 10008496.1
(22) Anmeldetag: 14.08.2010
(51) Int. Cl.: B07C 5/02, B07C 5/34, B65G 43/08, B65G 47/256

(54) **Fördereinrichtung mit einer Einrichtung zur Erkennung von umgefallenen Artikeln und Verfahren zu deren Steuerung**
Transportation device with means for detecting fallen articles and method for control of same
Dispositif de transport avec moyens de détection d'articles renversés et son procédé de commande

(30) Priorität: 10.09.2009 DE 102009043976
(43) Veröffentlichungstag der Anmeldung: 16.03.2011
(73) Patentinhaber: Krones AG, 93073 Neutraubling (DE)
(72) Erfinder: Bien, Andreas, 83101 Rohrdorf / Thansau (DE)
(74) Vertreter: Benninger, Johannes

(56) Entgegenhaltungen:
- EP-A1- 2 096 052
- WO-A1-2009/021515
- DE-A1- 4 207 835
- DE-A1- 4 332 426
- DE-A1- 4 332 461
- DE-A1- 10 007 627
- DE-U1- 20 110 686

## Beschreibung

Die vorliegende Erfindung betrifft eine Fördereinrichtung mit den Merkmalen des Anspruchs 1 sowie ein Verfahren zur Steuerung einer solchen Fördereinrichtung mit den Merkmalen des Anspruchs 4.

Bei der Beförderung, Behandlung und Verpackung von Artikeln und Gegenständen auf Horizontalförderern ist es nachteilig, wenn die Artikel nicht in der gewünschten Weise nebeneinander stehen. Umgefallene Artikel können zu Störungen in der Förderung sowie auch bei nachfolgenden Behandlungsschritten führen. So werden bspw. abgefüllte oder noch leere Flaschen und Getränkebehälter in großer Vielzahl nebeneinander stehend auf Förderbändern bewegt. Hierbei können schräg stehende, umgefallene oder beschädigte Flaschen zu Störungen im Handhabungsablauf führen, so dass solche Flaschen oder Behälter nach Möglichkeit erkannt und ausgesondert werden sollten.

Bekannte Fördereinrichtungen werden bei der Behälterzuführung, bspw. zu einer Abfüllanlage, mittels einer Lichtschranke und/oder mittels mechanischen Bauteilen wie bspw. beweglichen Klappen dahingehend überwacht, dass erkannt werden kann, ob an einer vorgesehen Position ein Behälter vorhanden ist, fehlt oder umgefallen ist. Nachteilig an diesen bekannten Überwachungs- und Erfassungseinrichtungen ist, dass sie jeweils auf eine bestimmte Behältergröße abgestimmt sind und bei einem Wechsel der Behältergröße angepasst oder umgerüstet werden müssen.

Das Dokument DE 10007627 A1 beschreibt ein Verfahren sowie eine Vorrichtung zum Ausleiten liegender Gefäße aus einem Strom. Mittels eines durch eine Steuereinrichtung betätigbaren Ausleitelement können Fremdgefäße als auch liegende Gefäße aus dem Strom entfernt werden. Die Fremdgefäße werden mit einer Sensoreinrichtung erkannt und unterschieden. Die Auswertung wird über die eine Sensoreinrichtung an die Steuereinrichtung übermittelt, die dem Ausleitelement bzw. mit einem sog. Pusher verbunden ist und diesen aktiviert.

Das Dokument DE 4332426 A1 beschreibt ein Verfahren zum Ausschleusen von beschädigten und/ oder liegenden Flaschen aus einem Flaschenstrom und eine Vorrichtung zur Durchführung des Verfahrens. Hierbei überprüft eine Prüfeinrichtung den Flaschenstrom auf liegende und/oder fehlerhafte Flaschen und erkennt die liegende Flasche, sobald diese in den Erfassungsbereich des Sensors gerät.

Ein Ziel der vorliegenden Erfindung besteht darin, die richtige Förderung und Positionierung von Artikeln, Gegenständen und Behältern auf einer Fördereinrichtung erkennen zu können, unabhängig von der Größe, der Form und den Abmessungen der Gegenstände.

Dieses Ziel der Erfindung wird mit den Gegenständen der unabhängigen Patentansprüche erreicht, wobei sich Merkmale vorteilhafter Weiterbildungen der Erfindung aus den jeweiligen abhängigen Ansprüchen ergeben.

Die Erfindung betrifft eine Fördereinrichtung für eine Vielzahl von in mehreren Gassen auf einer Förderebene bewegter Artikel oder Gegenstände, mit einer Erfassungseinrichtung zur Erkennung von auf der Förderebene fehlenden, falsch liegenden und/oder umgefallenen Artikeln oder Gegenständen. Diese Erfassungseinrichtung umfasst eine oberhalb der Förderebene angeordnete und einen Teilbereich eines Raums oberhalb der Förderebene erfassende optische Erfassungseinrichtung mit nachgeschalteter Auswerteeinheit bzw. Bildauswertung. Die optische Erfassungseinrichtung ist ein Volumenscanner und wird insbesondere durch einen Laserscanner gebildet, der zumindest das Volumen eines Artikels in einem Teilbereich eines Raumes oberhalb der Förderebene erfasst. Ein Erfassungsbereich der Erfassungseinrichtung deckt zumindest eine Breite der Förderebene ab. Die Breite der Förderebene kann bspw. die Breite eines Förderbandes sein.

Zudem kann es von Vorteil sein, wenn der Erfassungsbereich senkrecht oberhalb der Förderebene liegt, so dass die Gegenstände und Artikel unverzerrt erfasst werden können. Gemäß der vorliegenden Erfindung wird die optische Erfassungseinrichtung vorzugsweise durch einen Laserscanner gebildet, der ein Volumen der Gegenstände erfassen und an eine Bildauswertung liefern kann. Ein solcher Volumenscanner ist in der Lage, die beförderten Artikel zu erfassen und zumindest den Teilbereich des Volumens zu erfassen, der oberhalb einer definierten Ebene liegt, so dass schief stehende, umgefallene oder fehlende Artikel alleine schon dadurch erkannt werden können, dass bei diesen fehlerhaft liegenden Artikeln das relevante Volumen, das erfasst wird, kleiner ist als das relevante Volumen von richtig stehenden Artikeln. So fehlt bspw. bei einer umgefallenen Flasche das oberhalb einer mittleren Ebene liegende Volumen völlig, während das für die vorliegende Erfindung nicht relevante Volumen unmittelbar oberhalb der Transport- oder Förderebene unberücksichtigt bleiben kann. Somit ist bei der erfindungsgemäßen Fördereinrichtung vorgesehen, dass eine Auswerteschaltung einen Volumenbereich der Gegenstände oder Artikel innerhalb eines definierten Bereiches bzw. die gesamte Breite der Förderebene oder des Förderbandes oberhalb der Förderebene erfasst und ermittelt.

Wahlweise kann bei der Fördereinrichtung vorgesehen sein, dass die Auswerteschaltung in Abhängigkeit von einem erfassten Volumen der Gegenstände oder Artikel ein Fehlersignal liefert und/oder für eine Abschaltung der Fördereinrichtung sorgt.

Die vorliegende Erfindung betrifft gleichermaßen ein Verfahren zur Steuerung einer Fördereinrichtung für eine Vielzahl von in mehreren parallelen Gassen auf einer Förderebene bewegter Artikel oder Gegenstände, bei dem auf der Förderebene fehlende, falsch liegende und/oder umgefallene Artikeln oder Gegenstände mittels einer oberhalb der Förderebene angeordneten und einen Teilbereich eines Raums oberhalb der Förderebene erfassenden optischen Erfassungseinrichtung mit nachgeschalteter Auswerteeinheit oder Bildauswertung erfasst und erkannt werden, wobei bei einem fehlenden, falsch liegenden oder umgefallenen Gegenstand oder Artikel ein Fehlersignal erzeugt und/oder die Fördereinrichtung abgeschaltet wird. Die optische Erfassungseinrichtung ist ein Volumenscanner und wird durch einen Laserscanner gebildet, der einen Volumenbereich der Gegenstände oder Artikel innerhalb eines definierten Bereiches oberhalb der Förderebene erfasst und ermittelt. Dabei wird mit der Erfassungseinrichtung ein Erfassungsbereich abgedeckt, der einer Breite der Förderebene entspricht. Der definierte Bereich, der mit der Erfassungseinrichtung abgedeckt wird kann bspw. eine gesamte Breite eines Förderbandes betragen.

Bei einer derartigen Vorrichtung sind mindestens einer Fördereinrichtung zum Transportieren der Getränkebehälter mindestens zwei parallele Bänder zugeordnet, die durch Trennwände oder Gassenbleche voneinander räumlich getrennt sind. Durch diese Trennwände bilden sich mehrere Gassen, in denen die einzelnen Getränkebehälter auf den Bändern der Fördereinrichtung fluchten können. Auch ist es möglich, dass ein einzelnes Förderband der Fördereinrichtung zugeordnet ist, welches ebenfalls mehrere Trennwände oder Gassenbleche umfasst und dadurch das Förderband in mehrere Gassen unterteilt und die Getränkebehälter in den Gassen in Transportrichtung weiter transportiert werden können.

Die Getränkebehälter werden in Form eines Massenstroms der Fördereinrichtung zuführt. Der Massenstrom weist dabei eine Kugelpackung auf. Der Begriff Kugelpackung ist aus dem Stand der Technik dahingehend zu entnehmen, dass die einzelnen Getränkebehälter, welche im Massenstrom transportiert werden, entsprechend dem Hexagonal-Closepack auf einem vorgeordneten Transportband, bzw. auf einem zuminderst ersten Teilabschnitt eines sog. Dosierbandes angeordnet sind. Das Transportband sowie das Dosierband können bspw. als ein Mattenkettenförderer ausgebildet sein.

Zum Aufbrechen des Massenstroms, welcher mittels des Transportbandes angeliefert wird, können bei der vorliegenden Erfindung auf einem zweiten Teilabschnitt des Dosierbandes mehrere Separierelemente vorgesehen sein. Dabei sind die Separierelemente derart angeordnet, dass der Massenstrom der Getränkebehälter in einzelne Gruppen von Getränkebehälter aufspaltet.

Durch die angebrachten Trennwände oberhalb des Förderbandes bilden sich mehrere Gassen auf der Förderebene. Die Gassen sind in Transportrichtung gerichtet, so dass die Getränkebehälter in die Gassen gedrängt werden und mit dem Förderband weitertransportiert werden können. Durch diese Gassen werden die Getränkebehälter nacheinander in Reihen angeordnet und liegen vereinzelt zur weiteren Verarbeitung vor.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt schematisch eine aus dem Stand der Technik bekannte Fördereinrichtung mit einer Erfassungseinrichtung für Getränkebehälter.
Fig. 2 zeigt schematisch eine Ausführungsvariante einer erfindungsgemäßen Fördereinrichtung mit einer optischen Erfassungseinrichtung zur Erkennung von aufrecht beförderten Getränkebehältern.
Fig. 3 zeigt schematisch in einer Draufsicht eine Ausführungsvariante einer erfindungsgemäßen Fördereinrichtung mit einer optischen Erfassungseinrichtung zur Erkennung von aufrecht beförderten Getränkebehältern.

Die folgende detaillierte Beschreibung einer möglichen Ausführungsform der Erfindung dient als nicht einschränkendes Beispiel und nimmt auf die beigefügten Zeichnungen Bezug. Gleiche Bauteile weisen dabei grundsätzlich gleiche Bezugszeichen auf und werden teilweise nicht mehrfach erläutert.

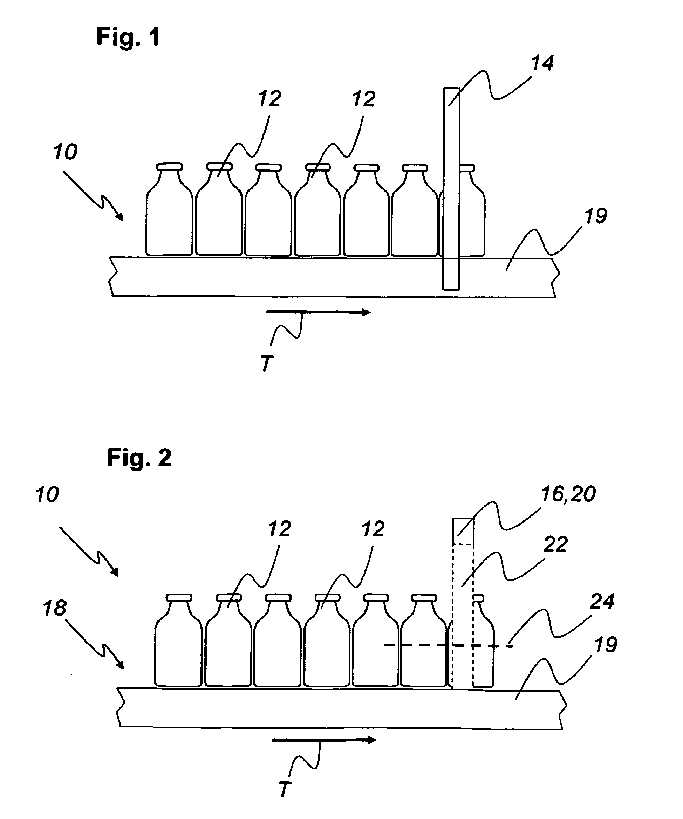

Die Fig. 1 zeigt in schematischer Darstellung eine aus dem Stand der Technik bekannte Fördereinrichtung 10 mit einer Reihe von aufrecht beförderten Getränkebehältern 12 und mit einer Erfassungseinrichtung 14 zur Erkennung falsch stehender, fehlender oder umgefallener Getränkebehälter 12. Die Getränkebehälter 12 stehen auf einem der Fördereinrichtung 10 zugeordneten Förderband 19 und werden in Transportrichtung T transportiert. Diese bekannte Erfassungseinrichtung 14 kann bspw. durch eine Lichtschranke und/oder durch eine schwenkbare Klappe o. dgl. gebildet sein. Bei der Beförderung unterschiedlicher Flaschengrößen ist normalerweise eine Anpassung der Erfassungseinrichtung 14 unverzichtbar, so dass eine universelle Verwendbarkeit für unterschiedliche Artikel und Behälter 12 nicht gegeben ist.

Die schematische Darstellung der Fig. 2 zeigt eine Ausführungsvariante einer erfindungsgemäßen Fördereinrichtung 10 mit einer optischen Erfassungseinrichtung 16 zur Erkennung von aufrecht beförderten Getränkebehältern 12. Die Getränkebehälter 12 werden in Transportrichtung T auf einem Förderband 19 transportiert. Die optische Erfassungseinrichtung 16 ist oberhalb einer Förderebene 18 bzw. des Förderbandes 19 angeordnet, auf der die Getränkebehälter 12 stehend befördert werden und ist in der Lage, fehlende, falsch liegende und/oder umgefallene Getränkebehälter 12 zu erkennen. Die optische Erfassungseinrichtung 16 umfasst bspw. einen oberhalb der Förderebene 18 angeordneten und einen Teilbereich eines Raums oberhalb der Förderebene 18 erfassenden Laserscanner 20 mit nachgeschalteter Auswerteeinheit oder Bildauswertung (nicht dargestellt). Der Erfassungsbereich 22 liegt senkrecht oberhalb der Förderebene 18, so dass die Getränkebehälter 12 unverzerrt erfasst werden können. Der Erfassungsbereich 22 des Laserscanners 20 deckt eine Breite des Förderbandes 19 oder der Förderebene 18 ab.

Der Laserscanner 20 ist in der Lage, ein Volumen der Getränkebehälter 12 zu erfassen und an die nachgeschaltete Bildauswertung zu liefern. Ein solcher Volumenscanner ist dadurch in die Lage versetzt, die beförderten Artikel bzw. Getränkebehälter 12 zu erfassen und zumindest den relevanten Teilbereich des Volumens zu erfassen, der oberhalb einer definierten Ebene 24 liegt, die beabstandet zur Förderebene 18 oder zum Förderband 19 ist, so dass schief stehende, umgefallene oder fehlende Getränkebehälter 12 alleine schon dadurch erkannt werden können, dass bei diesen fehlerhaft liegenden Getränkebehälter 12 das relevante Volumen, das erfasst wird, kleiner ist als das relevante Volumen von richtig stehenden Artikeln. So fehlt bspw. bei einem umgefallenen Getränkebehälter 12 das oberhalb der mittleren Ebene 24 liegende Volumen völlig, während das für die vorliegende Erfindung nicht relevante Volumen unmittelbar oberhalb der Transport- oder Förderebene 18 unberücksichtigt bleiben kann.

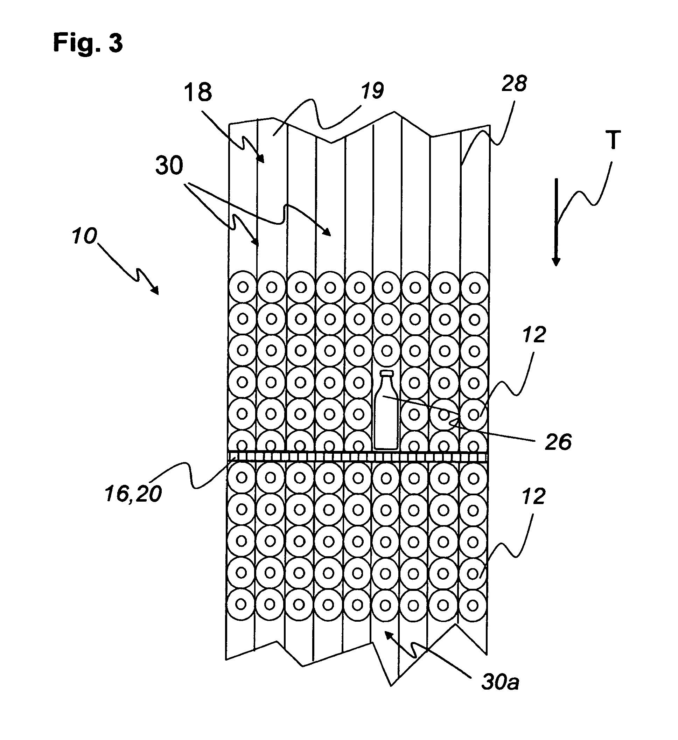

Die schematische Darstellung der Fig. 3 zeigt eine Draufsicht einer Ausführungsvariante einer erfindungsgemäßen Fördereinrichtung 10 mit einer optischen Erfassungseinrichtung 16 zur Erkennung von aufrecht beförderten Getränkebehältern 12. Die Getränkebehälter 12 werden in Transportrichtung T auf einem Förderband 19 oder einer Förderebene 18 transportiert.

Die Getränkebehälter 12 sind bereits in Gassen 30, die durch Gassenbleche bzw. Trennwände 28 gebildet werden, auf dem Förderband 19 oder der Förderebene 18 angeordnet. Oberhalb der Getränkebehälter 12 sowie der Förderebene 18 ist die optischen Erfassungseinrichtung 16 angebracht, die zur Erkennung von fehlenden, falsch liegenden und/oder umgefallenen Getränkebehälter 12 notwendig ist. Ein Laserscanner 20, der als optische Erfassungseinrichtung 16 verwendet wird, ist für die Erkennung von Getränkebehältern 12 sinnvoll.

In einer Gasse 30a ist bspw. ein umgefallener Getränkebehälter 26 vorhanden. Durch den Laserscanner 20 wird das fehlende Volumen in der bzw. oberhalb der definierten Ebene 24 (vgl. Fig. 2) erkannt und als Fehler an die Auswerteeinheit weitergegeben. Wahlweise kann vorgesehen sein, dass die Auswerteschaltung in Abhängigkeit von einem erfassten Volumen der Getränkebehälter 12 ein geeignetes Fehlersignal liefert und/oder für eine Abschaltung der Fördereinrichtung 10 sorgt.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste:

10 Fördereinrichtung
12 Getränkebehälter
14 Erfassungseinrichtung
16 Optische Erfassungseinrichtung
18 Förderebene
19 Förderband
20 Laserscanner
22 Erfassungsbereich
24 Ebene bzw. Bereich
26 liegende Getränkebehälter
28 Gassen- bzw. Trennbleche
30 Gassen
30a Gasse
T Transportrichtung

## Patentansprüche

1. Fördereinrichtung (10) für eine Vielzahl von in mehreren parallelen Gassen (30) auf einer Förderebene (18) bewegter Artikel oder Gegenstände, mit einer Erfassungseinrichtung (14) zur Erkennung von auf der Förderebene (18) fehlenden, falsch liegenden und/oder umgefallenen Artikeln oder Gegenständen, wobei die Erfassungseinrichtung (14) eine oberhalb der Förderebene (18) angeordnete und einen Teilbereich eines Raums oberhalb der Förderebene (18) erfassende optische Erfassungseinrichtung (16) mit nachgeschalteter Auswerteeinheit umfasst und die optische Erfassungseinrichtung (16) ein Volumenscanner ist und durch einen Laserscanner (20) gebildet ist, der zumindest das Volumen eines Artikels in einem Teilbereich eines Raums oberhalb der Förderebene (18) erfasst und wobei ein Erfassungsbereich (22) der Erfassungseinrichtung (16) eine Breite der Förderebene (18) abdeckt.

2. Fördereinrichtung nach Anspruch 1, bei der der Erfassungsbereich (22) senkrecht oberhalb der Förderebene (18) liegt.

3. Fördereinrichtung nach einem der Ansprüche 1 bis 2, bei der die Auswerteschaltung in Abhängigkeit von einem erfassten Volumen der Gegenstände oder Artikel ein Fehlersignal liefert und/oder für eine Abschaltung der Fördereinrichtung (10) sorgt.

4. Verfahren zur Steuerung einer Fördereinrichtung (10) für eine Vielzahl von in mehreren parallelen Gassen (30) auf einer Förderebene (18) bewegter Artikel oder Gegenstände, bei dem auf der Förderebene (18) fehlende, falsch liegende und/oder umgefallene Artikel oder Gegenstände mittels einer oberhalb der Förderebene (18) angeordneten und einen Teilbereich eines Raums oberhalb der Förderebene (18) erfassenden optischen Erfassungseinrichtung (16) mit nachgeschalteter Auswerteeinheit erfasst und erkannt werden, wobei bei einem fehlenden, falsch liegenden oder umgefallenen Gegenstand oder Artikel ein Fehlersignal erzeugt und/oder die Fördereinrichtung (10) abgeschaltet wird, wobei die optische Erfassungseinrichtung (16) ein Volumenscanner ist und durch einen Laserscanner (20) gebildet ist, der einen Volumenbereich der Gegenstände oder Artikel innerhalb eines definierten Bereiches (24) oberhalb der Förderebene (18) erfasst und ermittelt und wobei ein Erfassungsbereich (22) der Erfassungseinrichtung (16) eine Breite der Förderebene (18) abdeckt.

## Claims

1. A conveying device (10) for a plurality of articles or objects being moved in several parallel lanes (30) in one conveying plane (18), said conveying device (10) having a detection device (14) for detecting articles or objects in the conveying plane (18) that are missing, displaced, and/or have fallen over, wherein the detection device (14) comprises an optical detection device (16) with a downstream evaluation unit, said optical detection device (16) being arranged above the conveying plane (18) for monitoring a subsection of a space above the conveying plane (18), and wherein the optical detection device (16) is a volume scanner and is formed by a laser scanner (20), which monitors at least the volume of an article in a subsection of a space above the conveying plane (18) and wherein one detection range (22) of the detection device (16) covers a width of the conveying plane (18).

2. The conveying device according to claim 1 wherein the detection range (22) is located in a vertical position above the conveying plane (18).

3. The conveying device according to one of the claims 1 to 2 wherein the evaluation circuit outputs an error signal and/or provides for shutting down the conveying device (10) depending on a detected volume of the objects or articles.

4. A method for controlling a conveying device (10) for a plurality of articles or objects being moved in several parallel lanes (30) in one conveying plane (18), wherein said method detects and recognises articles or objects in the conveying plane (18) that are missing, displaced, and/or have fallen over by means of an optical detection device (16) with a downstream evaluation unit, said optical detection device (16) being arranged above the conveying plane (18) for monitoring a subsection of a space above the conveying plane (18), and wherein an error signal is generated and/or the conveying device (10) is shut down on detecting a missing, displaced or fallen object or article, wherein the optical detection device (16) is a volume scanner and is formed by a laser scanner (20), which monitors and identifies a volume range of the objects or articles within a defined section (24) above the conveying plane (18) and wherein one detection range (22) of the detection device (16) covers a width of the conveying plane (18).

## Revendications

1. Dispositif de transport (10) pour une pluralité d'articles ou d'objets déplacés sur plusieurs voies (30) parallèles sur un plan de transport (18), comprenant un dispositif de détection (14) destiné à détecter des articles ou objets qui font défaut, sont placés incorrectement et/ou sont tombés sur le plan de transport (18), ledit dispositif de détection (14) comprenant un dispositif de détection optique (16) ayant une unité d'évaluation montée en aval, qui est disposé au-dessus du plan de transport (18) et qui couvre une zone partielle d'un espace au-dessus du plan de transport (18), et ledit dispositif de détection optique (16) étant un scanneur de volume et étant constitué par un balayeur laser (20) qui balaye au moins le volume d'un article dans une zone partielle d'un espace au-dessus du plan de transport (18), et une zone de détection (22) du dispositif de détection (16) couvrant une largeur du plan de transport (18).

2. Dispositif de transport selon la revendication 1, dans lequel ladite zone de détection (22) est située perpendiculairement au-dessus du plan de transport (18).

3. Dispositif de transport selon l'une quelconque des revendications 1 à 2, dans lequel, en fonction d'un volume détecté des objets ou articles, le circuit d'évaluation fournit un signal d'erreur et/ou veille à ce que le dispositif de transport (10) soit arrêté.

4. Procédé de commande d'un dispositif de transport (10) pour une pluralité d'articles ou d'objets déplacés sur plusieurs voies (30) parallèles sur un plan de transport (18), dans lequel des articles ou objets qui font défaut, sont placés incorrectement et/ou sont tombés sur le plan de transport (18) sont détectés et identifiés au moyen d'un dispositif de détection optique (16) ayant une unité d'évaluation montée en aval, qui est disposé au-dessus du plan de transport (18) et qui couvre une zone partielle d'un espace au-dessus du plan de transport (18), dans lequel, lorsqu'un objet ou article fait défaut, est placé incorrectement ou tombé, un signal d'erreur est généré et/ou le dispositif de transport (10) est arrêté, ledit dispositif de détection optique (16) étant un scanneur de volume et étant constitué par un balayeur laser (20) qui balaye et détermine une zone de volume des objets ou articles à l'intérieur d'une zone définie (24) au-dessus du plan de transport (18), et une zone de détection (22) du dispositif de détection (16) couvrant une largeur du plan de transport (18).
